Europäisches Patentamt

**European Patent Office**

Office européen des brevets

(19)

(11) Veröffentlichungsnummer : **0 124 858**
**B1**

(12)                      EUROPÄISCHE PATENTSCHRIFT

(45) Veröffentlichungstag der Patentschrift :
**25.05.88**

(51) Int. Cl.⁴ : **H 04 Q 11/04, H 04 M 11/06**

(21) Anmeldenummer : **84104898.6**

(22) Anmeldetag : **02.05.84**

(54) **Schaltungsanordnung für den Teilnehmeranschluss in einem diensteintegrierenden Digitalnetz (ISDN).**

(30) Priorität : **05.05.83 DE 3316470**

(43) Veröffentlichungstag der Anmeldung :
**14.11.84 Patentblatt 84/46**

(45) Bekanntmachung des Hinweises auf die Patenterteilung : **25.05.88 Patentblatt 88/21**

(84) Benannte Vertragsstaaten :
**AT BE CH DE FR GB IT LI NL SE**

(56) Entgegenhaltungen :
**WO-A-83 /041 15**
**IEEE GLOBAL TELECOMMUNICATIONS CONFE-**
**RENCE, 29. November - 2. Dezember 1982, Miami,**
**Band 2, "Paper" D2.3, Seiten 750-756, IEEE, New**
**York, US; B.W. MOORE u.a.: "ISDN customer to**
**network signalling D channel protocol level 1**
**aspects"**
**PROCEEDINGS OF THE 1982 INTERNATIONAL SYM-**
**POSIUM ON SUBSCRIBER LOOPS AND SERVICES,**
**20.-24. September 1982, Toronto, Canada, Seiten 66-**
**70; K.W. WABER: "Considerations on customer**
**access to the ISDN"**

(73) Patentinhaber : **Siemens Aktiengesellschaft Berlin**
**und München**
**Wittelsbacherplatz 2**
**D-8000 München 2 (DE)**

(72) Erfinder : **Fundneider, Oswald**
**Enzianstrasse 82**
**D-8039 Puchheim (DE)**

## Beschreibung

Neuere Entwicklungen der Telekommunikationstechnik zielen über ein digitalisiertes Fernsprechnetz auf ein diensteintegrierendes Digitalnetz (ISDN) ab, in welchem in einheitlichen Telekommunikationskanälen .beispielsweise mit einer Bitrate von 64 kbit/s (je Übertragungsrichtung) außer Sprache auch Texte, Bilder und Daten übermittelt (übertragen und vermittelt) werden, wobei den Teilnehmern die Nutzung der verschiedenen Telekommunikationsdienste über einen einheitlichen Teilnehmeranschluß ermöglicht wird, an den Endgeräte für Telefonie, Textkommunikation, Bildkommunikation und Datenkommunikation in vielfältigen Konfigurationen anschließbar sind. Der ISDN-Teilnehmeranschluß muß dafür geeignete Grundeigenschaften, beispielsweise hinsichtlich der Bitrate, der Signalisierungsmöglichkeiten und der Reichweite, aufweisen.

In der internationalen Diskussion und bei Standardisierungsarbeiten bei CEFT und CCITT hat sich in diesem Zusammenhang insbesondere der sogenannte Basisanschluß (Basic Access) mit der Kanalstruktur B+B+D (je Übertragungsrichtung) herauskristallisiert, worin B ein 64-kbit/s-Kanal ist, der digital codierte Informationen unterschiedlicher Art wie Sprache, Text, Fax, Daten, simultan, von Verbindung zu Verbindung oder innerhalb einer Verbindung alternierend oder fest zugeordnet übertragen kann, und worin D ein (nicht weitervermittelter) 16-kbit/s-Kanal ist, in dem im Nachrichtenmultiplex mit Vorrang Signalisierungszeichen und darüber hinaus Telemetriesignale und langsame, paketorientierte Daten übertragen werden können ; für den Teilnehmeranschluß werden eine ISDN-Leitungsschnittstelle, die sog. U-Schnittstelle (am Ende der Teilnehmeranschlußleitung), und, mit dieser über eine sog. Netzabschlußeinheit (Network Termination) für die Funktionen innerhalb der Schicht 1 (physikalische Ebene) und ggf. auch der Schichten 2 und 3 des ISO-Funktionsschichtenmodells verbunden, eine ISDN-Endgeräteschnittstelle, die sog. S-Schnittstelle, definiert. Dabei wird davon ausgegangen, daß die S-Schnittstelle mehrpunktfähig ist, d. h., daß durch Verzweigung an der S-Schnittstelle Mehrgerätekonfigurationen gebildet werden können, in denen eine Mehrzahl von ISDN-Terminals mit S-Schnittstelle in einer Bus-, Stern- oder auch Ringstruktur angeordnet ist (ZPF - (1982) 9, 24...31 ; Fernmeldetechnik 22 (1982) 2, 67...69, und 23 (1983) 1, 6...8 und 9...14).

In einer S-Schnittstellen-Buskonfiguration können alle angeschlossenen Endgeräte (Terminals) unabhängig voneinander auf den D-Kanal (Signalisierungskanal) zugreifen, über den die Zuteilung eines B-Kanals von der Vermittlungseinrichtung bewirkt wird. Der konfliktfreie Zugriff auf den S-Bus wird dabei von den angeschlossenen Terminals im D-Kanal selbst geregelt, indem zunächst alle von den Endgeräten über den D-Kanal zur Netzabschlußeinheit gelangenden und von dort zur Vermittlungsstelle weiterzuübertragenden Bits gewissermaßen nach einer UND-Verknüpfung jeweils aller gleichzeitig auftretenden Bits in einem gesonderten D-Echo-Kanal über die S-Schnittstelle in der Weise zu den Endgeräten rückübertragen werden, daß 0-Bits gegenüber 1-Bits dominieren ; wenn verschiedene Endgeräte gleichzeitig 0-Bits und 1-Bits im D-Kanal senden, wird im D-Echokanal also stets ein 0-Bit zurückgegeben, so daß ein Endgerät, das ein 1-Bit ausgesendet hat, diese Abweichung erkennt und daraufhin seinen Zugriffsversuch abbricht.

In der Buskonfiguration ermöglicht die S-Schnittstelle einen Anschluß von bis zu 8 Endgeräten bei einer Buslänge von etwa 150 m ; in einer Einzelgerätekonfiguration mit nur einem Endgerät bzw. in einer Sternkonfiguration, bei der jedes Endgerät über eine eigene Leitung an eine Netzabschlußeinheit angeschlossen ist, liegt die Reichweite bei etwa 1 km.

Soll eine Mehrzahl von einzelnen Endgeräten jeweils über eine eigene S-Schnittstelle an eine gemeinsame ISDN-Netzabschlußeinheit angeschlossen werden, so stellt sich das Problem, wie die einzelnen schnittstellenindividuellen D-Kanäle in der Netzabschlußeinheit mit dem über die Netzabschlußeinheit und Vermittlungsstelle verbindende Teilnehmeranschlußleitung verlaufenden gemeinsamen D-Kanal zusammengeführt werden sollen, und die Erfindung zeigt hierzu einen vorteilhaften Weg.

Die Erfindung betrifft eine Schaltungsanordnung für den Teilnehmeranschluß in einem diensteintegrierenden Digitalnetz, in dem mono- oder multifunktionale Endgeräte mit ggf. über eine Anpassungseinrichtung herbeigeführter S-Schnittstelle mit der einen ISDN-Basisanschluß bildenden Teilnehmeranschlußleitung über eine Netzabschlußeinheit verbunden sind, in der die von der Vermittlungsstelle gesteuert jeweils einem Endgerät zugeteilten, über die Teilnehmeranschlußleitung zwischen ISDN-Netzabschlußeinheit und Vermittlungsstelle verlaufenden B-Kanäle zusammen mit dem gemeinsame D-Kanal im Multiplex zusammengefaßt bzw. aus dem Multiplex aufgefächert werden ; diese Schaltungsanordnung ist erfindungsgemäß dadurch gekennzeichnet, daß bei Anschluß einer Mehrzahl von einzelnen Endgeräten jeweils über eine eigene ISDN-S-Schnittstelle und/oder von jeweils eine Mehrzahl von Endgeräten zusammenfassenden ISDN-S-Schnittstellen-Bussen an einer gemeinsamen ISDN-Netzabschlußeinheit in der Netzabschlußeinheit die einzelendgeräte- bzw. busindividuellen D-Kanäle der zur Vermittlungsstelle weisenden Übertragungsrichtung zu dem zur Vermittlungsstelle weiterführenden gemeinsamen D-Kanal über eine eine UND-Verknüpfung bewirkende Einrichtung geführt sind, deren Ausgangssignal außerdem in einem D-Echokanal über die einzelendgeräte- bzw. busindividuellen S-Schnittstellen in der entgegengesetzten Übertragungsrichtung zu den Teilnehmern rückgeführt wird.

Die Erfindung, die sich das oben umrissene Schicht-1-Zugangsprotokoll für den Zugriff auf einen S-Bus in abgewandelter Form für die Zusammenführung der D-Kanäle mehrerer individuell an die Netzabschlußeinheit herangeführter S-Schnittstellen mit dem über die Teilnehmeranschlußleitung verlaufenden gemeinsamen D-Kanal zunutze macht, bringt zunächst den Vorteil einer wenig aufwendigen Realisierungsmöglichkeit für den jeweils individuellen Anschluß einer Mehrzahl von einzelnen Endgeräten jeweils über eine eigene ISDN-S-Schnittstelle an die gemeinsame ISDN-Netzabschlußeinheit mit sich. Darüber hinaus eröffnet die Erfindung aber auch den Weg zu einer größeren Flexibilität in der Konfiguration von ISDN-Mehrgeräteanschlüssen insofern, als die Erfindung zugleich mit einem solchen Anschluß endgeräteindividueller S-Schnittstellen oder alternativ dazu auch den Anschluß von jeweils eine Mehrzahl von Endgeräten zusammenfassenden ISDN-S-Schnittstellen-Bussen an der gemeinsamen ISDN-Netzabschlußeinheit ermöglicht.

In diesem Zusammenhang sei bemerkt, daß dem Merkmal eines solchen Anschlusses einer Mehrzahl von jeweils eine Mehrzahl von Endgeräten zusammenfassenden ISDN-S-Schnittstellen-Bussen an einer gemeinsamen ISDN-Netzabschlußeinheit allein oder auch in Kombination mit dem Anschluß wenigstens eines einzelnen Endgerätes (jeweils) über eine eigene S-Schnittstelle unabhängig von der oben angegebenen Führung und Verbindung der D-Kanäle in der Netzabschlußeinheit auch selbständige Bedeutung zukommt.

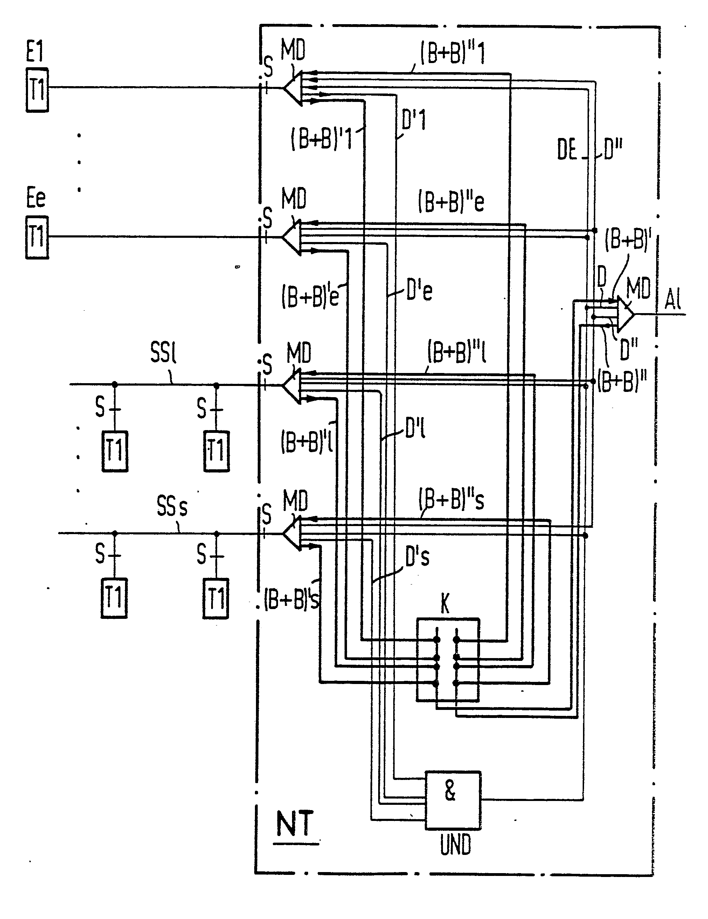

Anhand der Zeichnung sei die Erfindung noch näher erläutert.

Die Zeichnung zeigt schematisch in einem zum Verständnis der Erfindung erforderlichen Umfange eine ISDN-S-Schnittstellen S aufweisende ISDN-Netzabschlußeinheit (Network Termination) NT, an deren ISDN-S-Schnittstellen S sowohl Endgeräte E 1...Ee jeweils individuell angeschlossen sind als auch ISDN-S-Schnittstellen-Busse SS 1...SSs angeschlossen sind, die jeweils eine Mehrzahl von Endgeräten zusammenfassen. Für die einzelnen Endgeräte ist in der Zeichnung angedeutet, daß sie die sog. ISDN-T 1-Funktionen realisieren und damit die ISDN-S-Schnittstellenbedingungen erfüllen ; abweichend davon ist es aber auch möglich, daß das eigentliche Endgerät auch Funktionen umfaßt, die nicht diesen Bedingungen genügen, wobei dann dem Endgerät noch eine entsprechende Adaptereinrichtung zuzuordnen ist, die den funktionellen Zugang zum ISDN sicherstellt. Die S-Schnittstellen S der ISDN-Netzabschlußeinheit NT bilden damit jeweils einen ISDN-Basisanschluß (Basic Access) mit der Kanalstruktur B + B + D je Übertragungsrichtung, wobei die einzelnen Kanäle übertragungsrichtungsgetrennt jeweils zeitlich gebündelt sind. Über eine Teilnehmeranschlußleitung Al ist die Netzabschlußeinheit NT an eine in der Zeichnung nicht mehr dargestellte Vermittlungsstelle angeschlossen.

In der Zeichnung ist angedeutet, daß in der Netzabschlußeinheit NT die jeweils beiden einzelendgeräte- bzw. busindividuellen B-Kanäle (B + B)'1, (B + B)"1 ;...; (B + B)'e, (B + B)"e ; (B + B)'1, (B + B)"1 ;...; (B + B)'s, (B + B)"s jeder Übertragungsrichtung über einen Multiplexer/Demultiplexer MD an eine Vielfachschaltung K herangeführt sind ; über diese Vielfachschaltung K sind Verbindungen zwischen solchen B-Kanälen (B + B)'1,..., (B + B)"s und den im Multiplex mit dem gemeinsamen D-Kanal D' bzw. D" über die Teilnehmeranschlußleitung A 1 zwischen ISDN-Netzabschlußeinheit NT und Vermittlungsstelle geführten B-Kanälen (B + B)' bzw. (B + B)" gegeben.

Die einzelendgeräte- bzw. busindividuellen D-Kanäle D'1, ..., D'e, D'1,..., D's der zur Vermittlungsstelle weisenden Übertragungsrichtung sind zu dem zur Vermittlungsstelle weiterführenden gemeinsamen D-Kanal D' über eine eine UND-Verknüpfung bewirkende Einrichtung UND geführt ; in der umgekehrten Übertragungsrichtung ist der gemeinsame D-Kanal D" unmittelbar auf die S-schnittstellenindividuellen D-Kanäle aufgefächert. Mit den einzelendgeräte- bzw. busindividuellen S-Schnittstellen ist in der zuletzt betrachteten Übertragungsrichtung außerdem der Ausgang der die UND-Verknüpfung bewirkenden Einrichtung UND über einen gemeinsamen D-Echokanal DE verbunden, wobei in der Zeichnung angedeutet ist, daß die Bündelung von D-Echokanal und D-Kanal in dem der jeweiligen S-Schnittstelle zugehörigen Multiplexer/Demultiplexer MD vor sich gehen kann.

Damit wird erreicht, daß in der Leitungsabschlußeinheit NT die über deren einzelne S-Anschlüsse in den einzelnen D-Kanälen empfangenen Bits jeweils in einer UND-Funktion verknüpft werden und das jeweilige Verknüpfungsergebnis im D-Echokanal an alle S-Schnittstellen der Leitungsabschlußeinheit NT und weiter zu den dort angeschlossenen Endgeräten zurückgelangt ; unter Ausnutzung der eingangs umrissenen Schicht-1-Zugangsprotokoll-Funktion der Endgeräte wird damit ein konfliktfreier Zugriff der individuell bzw. über einen S-Bus SS an eine S-Schnittstelle der Netzabschlußeinheit NT angeschlossenen Endgeräte zum gemeinsamen D-Kanal D' geregelt : Bevor sie zu senden beginnen, prüfen die Endgeräte, ob der gemeinsame D-Kanal frei ist ; kennzeichnend dafür ist der Empfang eine vorgegebenen Mindestanzahl aufeinanderfolgender 1-Bits im D-Echokanal. Sobald dann bei einem gleichzeitigen Zugriffsversuch mehrere Endgeräte diese voneinander abweichend 0-Bits und 1-Bits im individuellen D-Kanal D'1,..., D's senden, wird im D-Echokanal DE stets ein 0-Bit zurückgegeben, so daß ein Endgerät, das ein 1-Bit ausgesendet hat, diese Abweichung zu erkennen und daraufhin seinen Zugriffsversuch abzubrechen vermag.

Abschließend sei noch bemerkt, daß die vorstehend erläuterte, eine Konzentration von S-Anschlüssen beliebiger Art ermöglichende Erfindung sowohl für an ein öffentliches Telekommunikationsnetz angeschlossene Teilnehmer als auch für Teilnehmer einer Nebenstellenanlage Anwendung finden kann.

**Patentanspruch**

Schaltungsanordnung für den Teilnehmeranschluß in einem dienstintegrierenden Digitalnetz (ISDN), in dem mono- oder multifunktionale Endgeräte (E) mit ggf. über eine Anpassungseinrichtung herbeigeführter S-Schnittstelle (S) mit der einen ISDN-Basisanschluß bildenden Teilnehmeranschlußleitung (AI) über eine Netzabschlußeinheit (NT) verbunden sind, in der die von der Vermittlungsstelle gesteuert jeweils einem Endgerät zugeteilten, über die Teilnehmeranschlußleitung zwischen ISDN-Netzabschlußeinheit und Vermittlungsstelle verlaufenden B-Kanäle zusammen mit dem gemeinsamen D-Kanal im Multiplex zusammengefaßt bzw. aus dem Multiplex aufgefächert werden, dadurch gekennzeichnet, daß bei Anschluß einer Mehrzahl von einzelnen Endgeräten (T1) jeweils über eine eigene ISDN-S-Schnittstelle (S) und/oder von jeweils eine Mehrzahl von Endgeräten (T1) zusammenfassenden ISDN-S-Schnittstellen-Bussen (SS) an einer gemeinsamen ISDN-Netzabschlußeinheit (NT) in der Netzabschlußeinheit (NT), in der die B-Kanäle (B) der einzelnen S-Anschlüsse (S) individuell an eine Vielfachschaltung (K) herangeführt werden, über die Verbindungen zwischen solchen B-Kanälen (B) und einem im Multiplex mit dem gemeinsamen D-Kanal (D) über die Teilnehmeranschlußleitung (AI) zwischen ISDN-Netzabschlußeinheit (NT) und Vermittlungsstelle geführten B-Kanal gegeben sind, die einzelendgeräte- bzw. busindividuellen D-Kanäle (D') der zur Vermittlungsstelle weisenden Übertragungsrichtung zu dem zur Vermittlungsstelle weiterführenden gemeinsamen D-Kanal (D') über eine eine UND-Verknüpfung bewirkende Einrichtung (UND) geführt sind, deren Ausgangssignal außerdem in einem D-Echokanal (DE) über die einzelendgeräte- bzw. busindividuellen S-Schnittstellen in der entgegengesetzten Übertragungsrichtung zu den Teilnehmern rückgeführt wird.

**Claim**

A circuit arrangement for connecting subscribers in a service-integrating digital network (ISDN) in which mono-functional or multi-functional terminals (E), with S-interfaces (S), which where necessary lead through a matching device, are connected to the subscriber line (AI), which forms an ISDN basic access, via a network termination unit (NT) in which the B-channels, which are each assigned to a terminal device under the control of the exchange and which extend along the subscriber line between ISDN-network termination unit and exchange, are combined in multiplex with the common D-channel or are fanned out from the multiplex, characterised in that when a common ISDN network termination unit (NT) is connected to a plurality of individual terminal devices (T1) in each case via an individual ISDN-S-interface (S) and/or to a plurality of ISDN-S-interface buses (SS), which in each case unite a plurality of terminal devices (T1), in the network termination unit (NT) in which the B-channels (B) of the individual S-terminals (S) lead individually to a multiple connection (K) via which connections are established between such B-channels (B) and a B-channel which extends in multiplex with the common D-channel (D) via the subscriber line (AI) between ISDN-network termination unit (NT) and exchange, the D-channels (D'), which are individually assigned to the individual terminal devices and buses, of the transmission direction pointing towards the exchange lead to the common D-channel (D'), which continues to the exchange, via a device (UND) which effects an AND-logic-link and whose output signal is also returned to the subscribers in the opposite transmission direction in a D echo channel (DE) via the S-interfaces which are individually assigned to the individual terminal devices and buses.

**Revendication**

Circuit pour le raccordement d'abonnés dans un réseau numérique à intégration de services (RNIS), dans lequel des terminaux (E) mono- ou multifonctionnels, avec une interface S (S), connectée éventuellement à travers un dispositif d'adaptation, sont reliés à la ligne de raccordement d'abonnés (AI), formant un raccordement de base (RNIS), à travers une unité de terminaison de réseau (NT), circuit dans lequel, sous la commande du centre de commutation, les voies B, attribuées chacune à un terminal et passant par la ligne de raccordement d'abonnés entre l'unité de terminaison de réseau RNIS et le centre de commutation, sont rassemblées avec la voie D commune dans un multiplex ou sont réparties en éventail à partir de ce multiplex, caractérisé en ce que, en cas de raccordement d'un certain nombre de terminaux (T1) séparés, chacun à travers une interface RNIS S (S) qui lui est propre et/ou en cas de raccordement de bus (SS) d'interfaces RNIS S, bus qui rassemblent chacun un certain nombre de terminaux (T1), à une unité de terminaison de réseau RNIS (NT) commune, unité de terminaison (NT) dans laquelle les voies B (B) des différents raccordements S (S) sont amenées individuellement à un montage multiple (K), montage qui réalise des liaisons entre ces voies B (B) et une voie B passée, en multiplex avec la voie D commune (D) par la ligne de raccordement d'abonnés (AI) entre l'unité de raccordement de réseau RNIS (NT) et le centre de commutation, les voies D (D'), coordonnées individuellement aux terminaux séparés, respectivement aux bus, du sens de transmission vers le centre de commutation, sont amenées à la voie D commune (D'), continuant vers le centre de commutation, à travers un dispositif (ET) produisant une opération ET, dispositif dont le signal de sortie est renvoyé, en outre, dans une voie D d'écho (DE), à travers les interfaces S coordonnées individuellement aux terminaux séparés, respectivement aux bus, dans le sens de transmission inverse, jusqu'aux abonnés.

0 124 858